# EUROPEAN PATENT SPECIFICATION

(11) **EP 3 460 961 B1**
(45) Date of publication and mention of the grant of the patent: **23.06.2021**
(21) Application number: 17192865.8
(22) Date of filing: 25.09.2017
(51) Int. Cl.: H02K 5/20, H02K 9/04, F03D 80/60, H02K 1/20, H02K 21/22, H02K 7/18

(54) **STATOR FOR AN ELECTRICAL GENERATOR IN A WIND TURBINE**
STATOR FÜR EINEN ELEKTRISCHEN GENERATOR IN EINER WINDTURBINE
STATOR DESTINÉ À UN GÉNÉRATEUR ÉLECTRIQUE DANS UNE TURBINE ÉOLIENNE

(43) Date of publication of application: 27.03.2019
(73) Proprietor: Siemens Gamesa Renewable Energy A/S, 7330 Brande (DK)
(72) Inventor: Airoldi, Giovanni, 8000 Aarhus (DK)
(74) Representative: Aspacher, Karl-Georg

(56) References cited:
- EP-A1- 2 648 316
- EP-A1- 3 054 565
- DE-A1-102012 008 209
- GB-A- 2 463 483

## Description

### Field of invention

The present invention relates to a stator for an electrical generator. Such stator may be particularly be used in a wind turbine.

### Art Background

In the above mentioned technical field of wind turbines, the electrical generator, and in particular the stator and the rotor, has to be cooled, in order to optimize the efficiency and achieve the highest possible value of generated electrical power. Various air cooling systems are known in the art for cooling the electrical generator in a wind turbine.

One method of cooling is commonly named direct cooling. According to such method a cooling medium, in particular air, is drawn inside the electrical generator from its sides, then axially through the air gap between stator and rotor and subsequently radially through cooling ducts provided in the stator at its circumferential external edge. From the cooling ducts the cooling medium enters a circumferential stator cavity, provided in the stator structure. The cooling medium flows in such circumferential cavity from the cooling ducts to an outlet opening in the stator structure. Cooling fans are connected to the outlet opening for drawing the air from the stator cavity to the environment outside the stator. The cooling fan generates a low pressure in the stator cavity, which draws the cooling air from the cooling ducts. The cooling air flows through the circumferential cavity and reaches the outlet opening in the stator structure, finally flowing towards and through the cooling fan. Along the circumferential cavity, the flow rate of the cooling medium increases proceeding towards the outlet opening. Consequently, the cooling medium velocity inside the stator circumferential cavity increases the closer the cooling air approaches the outlet opening. The difference in cooling air velocity along the circumferential path of the cooling air causes a pressure gradient inside the circumferential cavity of the stator. As a consequence, an un-uniform radial velocity distribution arises at the stator ducts, which causes uneven temperature distribution inside the stator and an inefficient cooling, because the stator cooling system needs to be designed on the maximum temperature. EP 3054565 discloses a cooling arrangement for a stator generator having a circumferential cavity, whose radial section is not constant, but which does not allow the velocity of the cooling medium to be kept as uniform as possible.

The object of the present invention is to avoid or minimize the above described inconveniences, by providing a stator for an electrical generator including a circumferential cavity for a cooling medium, where the velocity of the cooling medium is kept as uniform as possible.

### Summary of the Invention

This need may be met by the subject matter according to the independent claim. Advantageous embodiments of the present invention are described by the dependent claims.

According to the invention there is provided a stator for an electric generator, in particular for a wind turbine, the stator comprising a structure having a circumferential cavity for circulating a cooling medium, the circumferential cavity extending between a plurality of inlet cooling ducts and an outlet opening for letting the cooling medium exit the stator, wherein a plurality of radial sections of the circumferential cavity have different areal extensions, the radial section at the outlet opening having the greatest areal extension and the structure of the stator includes a circumferentially outer structure the inlet cooling ducts, the circumferential cavity and outlet opening being provided on the circumferentially outer structure. The circumferential cavity circumferential extends from a first radial section to a final radial section at the outlet opening, the areal extensions of the radial sections of the circumferential cavity increasing from the first radial section to the final radial section. The circumferentially outer structure has a fork shape with two slanted portions departing from a circumferential border of the annular support plate, the circumferential cavity axially extending between two slanted portions and radially extending between a circumferential external edge of the circumferentially outer structure and a deviation surface extending from one to the other of the two slanted portions, the deviation surface circumferentially connecting the first radial section and the final radial section.

The area of the radial section of the circumferential cavity in increased where the flow rate is greater. This makes the cooling medium velocity at the outlet of the inlet cooling ducts more uniform than in prior art embodiments with a uniform cross section inside the stator cavity. A more uniform cooling medium flow permits in particular to obtain a more uniform distribution of temperatures in the stator.

In embodiments of the present invention, the first radial section and the final radial section may be positioned on the stator diametrically opposed to each other.
An increase, particularly a continuous increase, of the radial section between the first radial section to the final radial section at the outlet opening helps in obtaining a uniform cooling medium flow and a uniform distribution of temperatures in the stator.

According to embodiments of the present invention, the stator further comprises a deviation insert inside the circumferential cavity, the deviation surface being provided on the deviation insert.

Using an insert provides a simple and cheap solution Advantageously, the insert may be made removable in order to simplify its installation and removal.

According to embodiments of the present invention, the insert is made in a light material, for example plastic, fiberglass or aluminum.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of an upper part of a wind turbine including an electrical generator with a stator according to the present invention.
- Figure 2: shows a lateral view of a portion of a stator according to the present invention.
- Figure 3: shows a lateral section of the stator portion of Figure 2.
- Figure 4: shows a first radial section of the stator cavity of the stator of Figure 2, taken along the section line IV-IV of Figure 3.
- Figure 5: shows an intermediate radial section of the stator cavity of the stator of Figure 2, taken along the section line V-V of Figure 3.
- Figure 6: shows a final radial section of the stator cavity of the stator of Figure 2, taken along the section line VI-VI of Figure 3.
- Figure 7: shows an axonometric view of the stator cavity of the stator of Figure 2.
- Figure 8: shows a lateral view of a volume of a cooling medium inside the stator cavity of Figure 7.

### Detailed Description

The illustrations in the drawings are schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

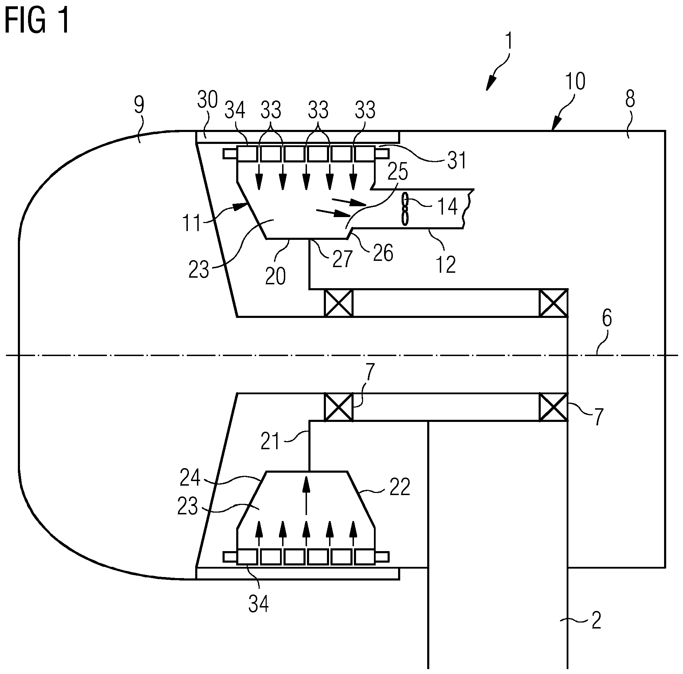

Figure 1 shows a wind turbine 1 having a nacelle 10 arranged on top of a tower 2, which is mounted on a non-depicted fundament. Between the tower 2 and the nacelle 10 a yaw angle adjustment device is provided, which is capable of rotating the nacelle 10 around a not depicted vertical axis, which is aligned basically with the longitudinal extension of the tower 2. By controlling the yaw angle adjustment device in an appropriate manner it can be made sure, that during a normal operation of the wind turbine 1 the nacelle 10 is always properly aligned with the current wind direction.

On a front end of a main body 8 of the nacelle 10, a hub 9 having three blades (not represented in the attached drawings) is provided.
The hub 9 is rigidly coupled to a rotatable shaft 6. A schematically depicted bearing assembly 7 is provided in the nacelle 10 in order to support the rotation of the rotatable shaft 6 and of the hub 9 coupled thereto, with respect to the main body 8 of the nacelle 10.
In the following the terms axial (or longitudinal), radial and circumferential in the following are made with reference to the axis Y of the shaft 6.

The nacelle 10 comprises an electric generator 11, located at the front end of the nacelle 10 between the hub 9 and the main body 8 of the nacelle 10. In accordance with the basic principles of electrical engineering the electric generator 11 comprises a stator 20 and a rotor 30.
The rotor 30 is rigidly coupled to the rotatable shaft 6 and rotates solidly with it around the bearing assembly 7. The stator 20 is instead rigidly fixed to the body 8 of the nacelle 10 and is coaxial to the shaft 6. Around a circumferentially border of the stator 20 an air gap 31 is provided between the stator 20 and the rotor 30. In operation the temperature in the air gap 31 rises. Such temperature has to be controlled beyond a limit to assure to keep the efficiency of the generator within acceptable values. It is of further importance to design the stator 20 in such a manner that a cooling of components of the stator is possible.
For such reason the stator 20 comprises a structure 21, 22 having a circumferential cavity 23 for circulating a cooling medium, in particular air, the circumferential cavity 23 extending between a plurality of inlet cooling ducts 33 and an outlet opening 25 for letting the cooling medium exit the stator 20.
With reference to the embodiment of the attached figures, the structure 21, 22 includes a circumferentially outer structure 22 and inner annular support plate 21. The circumferentially outer structure 22 is attached and surrounds the inner annular support plate 21. The inlet cooling ducts 33, the circumferential cavity 23 and outlet opening 25 are provided on the circumferentially outer structure 22.
The circumferentially outer structure 22 has a fork shape with two slanted portions 24, 26 departing from a circumferential border 27 of the annular support plate 21.
The inlet cooling ducts 33 are provided at a circumferential external edge 34 of the circumferentially outer structure 22. The outlet opening 25 is provided on one of the two slanted portions 24, 26.
Attached to the outlet opening 25 an outlet duct 12 is provided, where a cooling fan 14 is arranged. The cooling fan 14 generates the flow of the cooling medium inside the inlet cooling ducts 33 and an outlet opening 25.

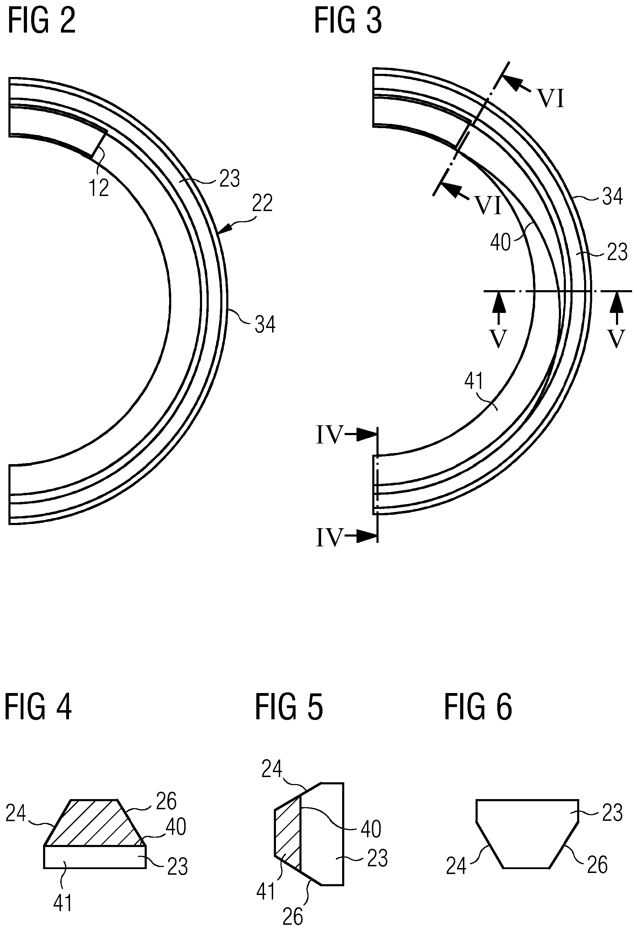

Figure 2 shows a schematic lateral external view of half of the circumferentially outer structure 22 and of the outlet duct 12 extending between the outlet opening 25 and the cooling fan 14.
According to other embodiments of the present invention (not represented) other structures of the stator 20 and other shapes of the circumferential cavity 23 may be envisaged, provided that, for all embodiments, different radial sections IV-IV, V-V, VI-VI of the circumferential cavity 23 have different areal extensions, as shown in figures 3 to 6 and that the radial section VI-VI (Figure 6) at the outlet opening 25 has the greatest areal extension among the areal extension of the radial sections.
The circumferential cavity 23 circumferential extends from a first radial section IV-IV (Figure 4) to a final radial section VI-VI at the outlet opening 25, through an intermediate radial section V-V (Figure 5). The areal extensions of the radial sections IV-IV, V-V, VI-VI of the circumferential cavity 23 increases continuously from the first radial section IV-IV to the final radial section VI-VI. The first radial section IV-IV is arranged with respect to the final radial section VI-VI in such a way to be diametrically opposed, with respect to an axis of the stator 20 to the final radial section VI-VI.
Also in the other half of the circumferentially outer structure 22, which is not represented in Figures 2 and 3, the areal extensions of the radial sections of the circumferential cavity 23 increases continuously from the first radial section IV-IV up to the outlet opening 25.
To obtain that, a deviation surface 40 is provided inside the circumferential cavity 23 for limiting the areal extensions of the radial sections of the circumferential cavity 23, which are circumferentially more remote from outlet opening 25. The deviation surface 40 circumferentially connects the first radial section IV-IV and the final radial section VI-VI. As shown in the embodiment of the attached figures, the deviation surface 40 axially extends between one and the other of two slanted portions 24, 26. As a result the circumferential cavity 23 axially extends between the two slanted portions 24, 26 and radially extends between the circumferential external edge 34 and the deviation surface 40.

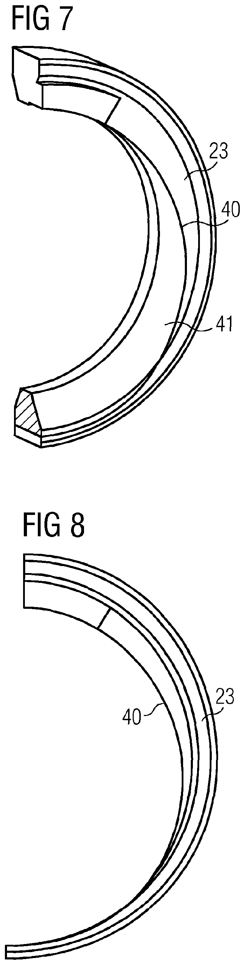

Figures 3 and 7 show how the deviation surface 40 may be provided on a solid deviation insert 41 inside the circumferential cavity 23 in contact with the inner surface of the circumferentially outer structure 22, in particular with the two slanted portions 24, 26.
The deviation insert 41 is provided also other half of the circumferentially outer structure 22, which is not represented in Figures 3 and 7, in order that the areal extensions of the radial sections of the circumferential cavity 23 increases continuously from the first radial section IV-IV up to the outlet opening 25.

The deviation insert 41 may be in particular removably attached to the circumferentially outer structure 22, in particular with the two slanted portions 24, 26.
The deviation insert 41 is preferably made of light material, such as plastic, fiber glass or aluminum.
The areal extensions of the radial sections of the deviation insert 41 decreases continuously from the first radial section IV-IV to the final radial section VI-VI, as shown in figures 4 to 6, in order to obtain the desired shape of the circumferential cavity 23.
Figure 8 shows the volume occupied by the cooling medium inside the circumferential cavity 23. The continuous increasing of the areal extension of the radial section of the passage available for the cooling medium assures the uniformity of the cooling medium velocity, as required by the present invention.

## Claims

1. A stator (20) for an electric generator (11), in particular for a wind turbine (1), the stator (20) comprising a structure (21, 22) having a circumferential cavity (23) for circulating a cooling medium, the circumferential cavity (23) extending between a plurality of inlet cooling ducts (33) and an outlet opening (25) for letting the cooling medium exit the stator (20),
wherein a plurality of radial sections (IV-IV, V-V, VI-VI) of the circumferential cavity (23) have different areal extensions, the radial section (VI-VI) at the outlet opening (25) having the greatest areal extension among areal extension of the radial sections (VI-VI), wherein the structure (21, 22) includes a circumferentially outer structure (22), the inlet cooling ducts (33), the circumferential cavity (23) and outlet opening (25) being provided on the circumferentially outer structure (22) **characterized in that** the circumferential cavity (23) circumferentially extends from a first radial section (IV-IV) to a final radial section (VI-VI) at the outlet opening (25), the areal extensions of the radial sections (IV-IV, V-V, VI-VI) of the circumferential cavity (23) increasing from the first radial section (IV-IV) to the final radial section (VI-VI), and
the circumferentially outer structure (22) has a fork shape with two slanted portions (24, 26) departing from a circumferential border of an annular support plate (21), the circumferential cavity (23) axially extending between the two slanted portions (24, 26) and radially extending between a circumferential external edge (34) of the circumferentially outer structure (22) and a deviation surface (40) extending from one to the other of the two slanted portions (24, 26), the deviation surface (40) circumferentially connecting the first radial section (IV-IV) and the final radial section (VI-VI).

2. The stator (20) of claim 1, wherein the first radial section (IV-IV) and the final radial section (VI-VI) are diametrically opposed to each other.

3. The stator (20) of claim 1, wherein the outlet opening (25) is provided on one of the two slanted portions (24, 26).

4. The stator (20) of any of the previous claims, wherein the inlet cooling ducts (33) are provided at a circumferential external edge (34) of the structure (21, 22) of the stator.

5. The stator (20) of any of the previous claims 1 to 4, wherein the stator further comprises a deviation insert (41) inside the circumferential cavity (23), the deviation surface (40) being provided on the deviation insert (41).

6. The stator (20) of claim 5, wherein the deviation insert (41) is removably attachable to the stator (20).

7. The stator (20) of any of the claims 5 or 6, wherein the deviation insert (41) is made of plastic, fiber glass or aluminum.

## Patentansprüche

1. Stator (20) für einen elektrischen Generator (11), insbesondere für eine Windenergieanlage (1), wobei der Stator (20) eine Konstruktion (21, 22) mit einem umlaufenden Hohlraum (23) zum Zirkulieren eines Kühlmittels umfasst, der sich zwischen mehreren Einlasskühlkanälen (33) und einer Auslassöffnung (25) zum Ausströmenlassen des Kühlmittels aus dem Stator (20) erstreckt,
wobei mehrere radiale Teilstücke (IV-IV, V-V, VI-VI) des umlaufenden Hohlraums (23) eine unterschiedliche räumliche Ausdehnung aufweisen, wobei das radiale Teilstück (VI-VI) an der Auslassöffnung (25) unter den räumlichen Ausdehnungen der radialen Teilstücke (VI-VI) die größte räumliche Ausdehnung aufweist, wobei die Konstruktion (21, 22) eine in Umfangsrichtung außenliegende Konstruktion (22) aufweist, wobei die Einlasskühlkanäle (33), der umlaufende Hohlraum (23) und die Auslassöffnung (25) an der in Umfangsrichtung außenliegenden Konstruktion (22) vorgesehen sind,
**dadurch gekennzeichnet, dass** sich der umlaufende Hohlraum (23) in Umfangsrichtung von einem ersten radialen Teilstück (IV-IV) bis zu einem letzten radialen Teilstück (VI-VI) an der Auslassöffnung (25) erstreckt, wobei die räumliche Ausdehnung der radialen Teilstücke (IV-IV, V-V, VI-VI) des umlaufenden Hohlraums (23) von dem ersten radialen Teilstück (IV-IV) bis zu dem letzten radialen Teilstück (VI-VI) zunimmt, und die in Umfangsrichtung außenliegende Konstruktion (22) eine Gabelform mit zwei abgeschrägten Abschnitten (24, 26) aufweist, die von einem umlaufenden Rand einer ringförmigen Halteplatte (21) ausgehen, wobei sich der umlaufende Hohlraum (23) axial zwischen den beiden abgeschrägten Abschnitten (24, 26) und radial zwischen einer umlaufenden Außenkante (34) der in Umfangsrichtung außenliegenden Konstruktion (22) und einer Abweichungsfläche (40) erstreckt, die sich von dem einen zu dem anderen der beiden abgeschrägten Abschnitte (24, 26) erstreckt, wobei die Abweichungsfläche (40) das erste radiale Teilstück (IV-IV) in Umfangsrichtung mit dem letzten radialen Teilstück (VI-VI) verbindet.

2. Stator (20) nach Anspruch 1, wobei das erste radiale Teilstück (IV-IV) und das letzte radiale Teilstück (VI-VI) einander diametral gegenüberliegen.

3. Stator (20) nach Anspruch 1, wobei die Auslassöffnung (25) an einem der zwei abgeschrägten Abschnitte (24, 26) vorgesehen ist.

4. Stator (20) nach einem der vorhergehenden Ansprüche, wobei die Einlasskühlkanäle (33) an einer umlaufenden Außenkante (34) der Konstruktion (21, 22) des Stators vorgesehen sind.

5. Stator (20) nach einem der vorhergehenden Ansprüche 1 bis 4, wobei der Stator ferner einen Abweichungseinsatz (41) in dem umlaufenden Hohlraum (23) umfasst, wobei die Abweichungsfläche (40) an dem Abweichungseinsatz (41) vorgesehen ist.

6. Stator (20) nach Anspruch 5, wobei sich der Abweichungseinsatz (41) abnehmbar an dem Stator (20) anbringen lässt.

7. Stator (20) nach einem der Ansprüche 5 oder 6, wobei der Abweichungseinsatz (41) aus Kunststoff, glasfaserverstärktem Kunststoff oder Aluminium hergestellt ist.

## Revendications

1. Stator (20) pour un générateur électrique (11), en particulier pour une éolienne (1), le stator (20) comprenant une structure (21, 22) ayant une cavité circonférentielle (23) pour la circulation d'un support de refroidissement, la cavité circonférentielle (23) s'étendant entre une pluralité de conduits de refroidissement d'entrée (33) et une ouverture de sortie (25) pour laisser sortir le support de refroidissement du stator (20),
dans lequel une pluralité de sections radiales (IV-IV, V-V, VI-VI) de la cavité circonférentielle (23) ont différentes extensions de surface, la section radiale (VI-VI) au niveau de l'ouverture de sortie (25) ayant la plus grande extension de surface parmi l'extension de surface des sections radiales (VI-VI),
dans lequel la structure (21, 22) inclut une structure circonférentielle extérieure (22), les conduits de refroidissement d'entrée (33), la cavité circonférentielle (23) et l'ouverture de sortie (25) étant disposés sur la structure circonférentielle extérieure (22) **caractérisée en ce que** la cavité circonférentielle (23) s'étend circonférentiellement d'une première section radiale (IV-IV) à une section radiale finale (VI-VI) au niveau de l'ouverture de sortie (25), les extensions de surface des sections radiales (IV-IV, V-V, VI-VI) de la cavité circonférentielle (23) augmentant de la première section radiale (IV-IV) à la section radiale finale (VI-VI), et
la structure circonférentielle extérieure (22) a la forme d'une fourche possédant deux portions inclinées (24, 26) partant d'une bordure circonférentielle d'une plaque de soutien annulaire (21), la cavité circonférentielle (23) s'étendant axialement entre les deux portions inclinées (24, 26) et s'étendant radialement entre un bord externe circonférentiel (34) de la structure circonférentielle extérieure (22) et une surface de déviation (40) s'étendant de l'une à l'autre des deux portions inclinées (24, 26), la surface de déviation (40) raccordant circonférentiellement la première section radiale (IV-IV) et la section radiale finale (VI-VI).

2. Stator (20) selon la revendication 1, dans lequel la première section radiale (IV-IV) et la section radiale finale (VI-VI) sont diamétriquement opposées l'une par rapport à l'autre.

3. Stator (20) selon la revendication 1, dans lequel l'ouverture de sortie (25) est disposée sur l'une des deux portions inclinées (24, 26).

4. Stator (20) selon l'une quelconque des revendications précédentes, dans lequel les conduits de refroidissement d'entrée (33) sont disposés au niveau d'un bord externe circonférentiel (34) de la structure (21, 22) du stator.

5. Stator (20) selon l'une quelconque des revendications précédentes 1 à 4, dans lequel le stator comprend en outre un insert de déviation (41) à l'intérieur de la cavité circonférentielle (23), la surface de déviation (40) étant disposée sur l'insert de déviation (41).

6. Stator (20) selon la revendication 5, dans lequel l'insert de déviation (41) peut être attaché de manière amovible au stator (20).

7. Stator (20) selon l'une quelconque des revendications 5 ou 6, dans lequel l'insert de déviation (41) est fait de plastique, de fibre de verre ou d'aluminium.
